# EUROPEAN PATENT SPECIFICATION

(11) **EP 1 432 143 B1**
(45) Date of publication and mention of the grant of the patent: **13.04.2011**
(21) Application number: 03029251.0
(22) Date of filing: 18.12.2003
(51) Int. Cl.: H04B 7/005

(54) **Method for controlling output power in mobile communication system**
Sendeleistungsverfahren in Mobilkommunikationssystemen
Procédé de commande de puissance d'émission dans un système de communication mobile

(30) Priority: 20.12.2002 KR 2002081867
(43) Date of publication of application: 23.06.2004
(73) Proprietor: LG Electronics Inc., Seoul 150-721 (KR)
(72) Inventor: Yu, Jae-Wook, Manan-Gu Anyang, Gyeonggi-Do (KR)
(74) Representative: Katérle, Axel

(56) References cited:
- WO-A2-02/23764
- US-A- 6 085 108
- US-A1- 2002 019 245

## Description

### Field of the Invention

The present invention relates to a method for controlling output power of a handheld terminal in a mobile communication system, and in particular to a method for controlling output power of a handheld terminal capable of controlling uplink output power of a handheld terminal as the optimum state.

### Prior Art

International Patent Application WO02/23764 discloses that the energy of the transmit power control command may be set by adjusting the power at which the transmit power control command is transmitted and by adjusting the coding of the transmit power control command.

### Description of the Related Art

In a mobile communication system, a registered handheld terminal can perform communication by being connected with the other party wirelessly through a BS (base station). Herein, one of methods for making plural handheld terminals communicate simultaneously by using limited frequency (or channel) resources is a TD-SCDMA (time division synchronous code division multiple access).

The TD-SCDMA method performs time division of a signal by a CDMA (code division multiple access) and is adopted for a standard mobile communication system in China.

In the mobile communication system by the TD-SCDMA method, plural communications are transmitted with the same frequency spectrum, because they may interfere with each other, signals transmitted from plural handheld terminals to the BS in a pertinent service area have to have similar signal intensity, and accordingly output power of the handheld terminal has to be controlled.

In order to control output power, in the TD-SCDMA method, a closed-loop power control method for commanding intensity increase/decrease of a transmitting signal of a handheld terminal according to intensity of a receiving signal from the BS to the handheld terminal is used.

With reference to a CWTS (china wireless telecommunication standards group), a position of a TPC (transmit power control) code capable of commanding in-tensity increase/decrease of a transmitting signal can be obtained in a time slot burst structure of a physical channel structure.

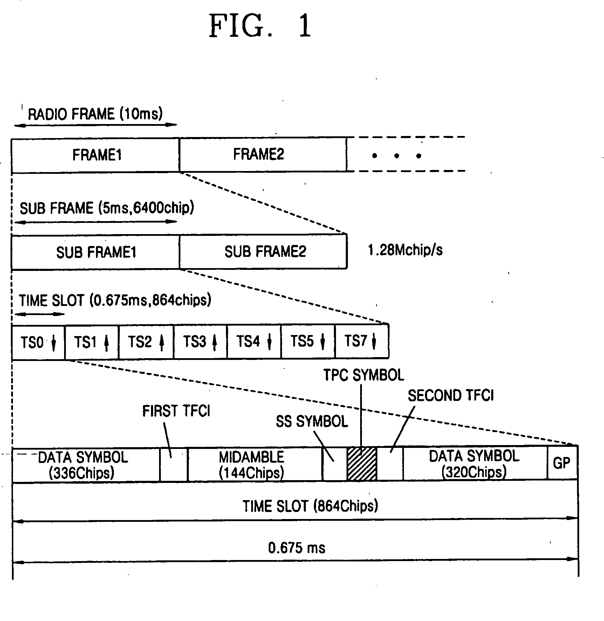

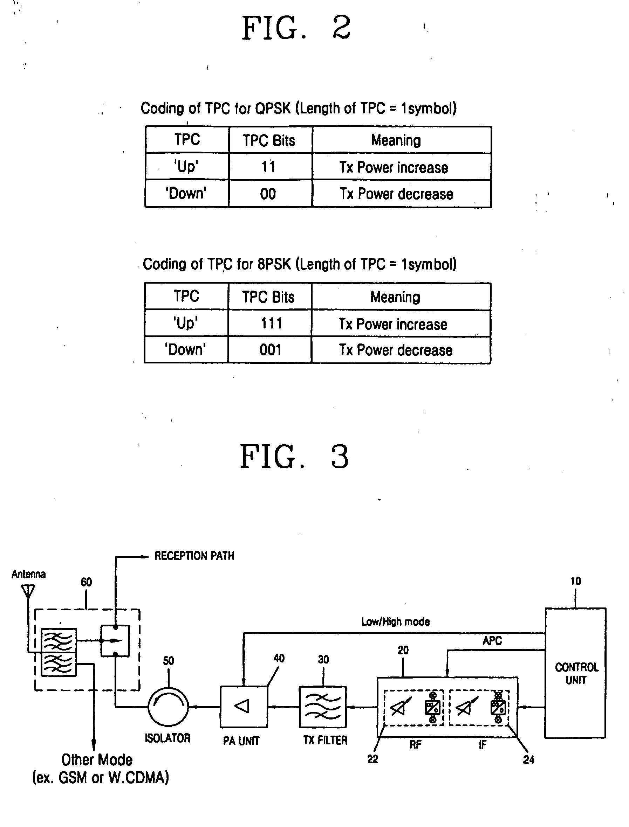

Hereinafter, a general method for controlling output power of a handheld terminal in a mobile communication system will be described with reference to Figures 1 and 2.

Figure 1 illustrates a structure of a general physical channel.

As depicted in Figure 1, in the digital mobile communication system by the TD-SCDMA method, a signal is transmitted by frame units, one frame is called a radio frame, and it has a temporal cycle of 10 ms. In addition, one radio fame is 1.28 MCHIP/S by consisting of two subframes respectively having 6,400 chips of 5ms cycle. Herein, each frame consists of total seven time slots from TS0 to TS6. Accordingly, the time slot is used as an uplink or a downlink according to transmitted data.

Each time slot is 0.675 ms and consists of 864 chips. Herein, each time slot is constructed in order of a data symbol, a 1st TFCI (transport format combination indicator), a midamble, a SS (synchronization shift) symbol, a TPC (transmit power control) symbol, a 2nd TFCI, a data symbol and a GP (guard period).

In that construction, the TPC symbol (hereinafter referred to as a TPC) is used for an output power control command, and it is indicated as deviant lines in Figure 1.

Figure 2 is a state diagram illustrating an output power control code state of a digital mobile communication system by the general TD-SCDMA method.

With reference to TSC103 according to the CWTS (China wireless telecommunication standards group), regardless of QPSK (quadrature phase shift keying) or 8PSK (8 phase shift keying), the TPC performs only two commands such as up and down only by being compared with a reference value. In more detail, in order to command intensity increase/decrease of a transmitting signal, 1 symbol is allocated to the TPC, 2 bits are allocated in the QPSK method as a modulation method for a digital signal, and 3 bits are allocated in the 8PSK method.

However, in that case, the TPC performs only two commands for increasing and decreasing output power by using two status respectively. In addition, in the conventional terminal transmit path using the above-mentioned system, a physical APC (automatic power control) signal capable of changing only power in a mixer unit is mainly used. Accordingly, with the above-mentioned simple output power control method, it is difficult to minimize power consumption or obtain the optimum uplink signal quality in various communication environments.

### SUMMARY OF THE INVENTION

In order to solve the above-mentioned problems, it is an object of the present invention to provide a method for controlling output power of a handheld terminal in a mobile communication system capable of minimizing power consumption and controlling uplink output quality of a handheld terminal as the optimum state by controlling an amplification rate by generating various TPC coding values.

In order to achieve the above-mentioned object, a method for controlling output power of a handheld terminal in a mobile communication system in accordance with the present invention as defined by independent claim 1 includes generatin each TPC transmit power control) coding value according to handheld terminal transmit output characteristics; setting a uplink Eb/No reference value about all handheld terminals and comparing an Eb/No about generated each TPC coding value with the reference value; selecting an optimum power control command by a base station and transmitting the selected command value to the handheld terminal periodically; and adjusting a transmit power level of the handheld terminal by answering to TPC coding about the selected power control command value.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 illustrates a structure of a general physical channel;
Figure 2 is a table illustrating a state of an output power control code of a digital mobile communication system by a TD-SCDMA (time division synchronous code division multiple access) method;
Figure 3 is an exemplary view illustrating a construction of a transmission path of a TD-SCDMA handheld terminal in accordance with the present invention;
Figure 4 is a table illustrating a TPC (transmit power control) coding about a QPSK (quadrature phase shift keying) modulation method in accordance with the present invention; and
Figure 5 is a flow chart illustrating a method for controlling output power of a handheld terminal in a mobile communication system in accordance with the present invention.

### DETAILED DESCRIPTION OF THE PREFERRED EMBODIMENT

Hereinafter, the preferred embodiment of a method for controlling output power of a handheld terminal in a mobile communication system capable of minimizing power consumption and controlling uplink output quality of a handheld terminal as the optimum state by controlling an amplification rate by generating each TPC coding value according to handheld terminal transmission power characteristics will be described with reference to Figures 3 ∼ 5.

Figure 3 is an exemplary view illustrating a construction of a transmission path of a TD-SCDMA time division synchronous code division multiple access) handheld terminal in accordance with the present invention.

As depicted in Figure 3, the TD-SCDMA handheld terminal includes a control unit 10 for processing and outputting a base band signal, controlling each unit of the handheld terminal and controlling an amplification rate of each amplifying unit according to a TPC (transmit power control) signal; a mixer unit 20 for modulating a baseband signal applied from the control unit 10 into an IF (intermediate frequency) signal by a transmit IF mixer unit 24, amplifying the modulated signal as an amplification rate set by an APC (auto power control) signal applied from the control unit 10, modulating the IF signal into a RF signal by a transmit RF mixer unit 22, amplifying the modulated signal as an amplification rate set by an APC signal applied from the control unit 10 and outputting it; a TX filter 30 for removing noise components applied from the mixer unit 20 and outputting a RF signal; a PA (power amplifier) unit 40 for amplifying the RF signal applied from the TX filter 30 as an amplification rate set by the control unit 10; an isolator 50 for transmitting a signal from the PA unit 40 in a certain direction so as not to be applied in a reverse direction; and a switch duplexer 60 for transmitting the signal applied from the isolator 50 wirelessly or dividing a signal received through an antenna.

The method for controlling output power of the handheld terminal in the mobile communication system in accordance with the present invention will be described in more detail.

First, when different each variable amplifier having several phases is used, although gain is the same from input to output, final output characteristics are totally different according to variable weighting allocation to a variable amplifier of each phase.

For example, there are two cases, in one case the mixer unit is 10dB and the PA unit is 40dB, in the other case the mixer unit is 40dB and the PA unit is 10dB, among the total gain of a transmit path, gain of the mixer unit and the PA unit is the same as 50dB, however, RF characteristics in an output block of the handheld terminal are totally different in the two cases. In more detail, although the same output gain occurs, in case of allocating amplification at the high rate to the mixer unit, consumed current amount is reduced, in case of allocating amplification at the high rate to the PA unit for increasing final output power, consumed current amount is increased.

In more detail, at the output block of the handheld terminal, handheld terminal transmit characteristics such as ALCR (adjacent channel leakage power ratio) and intermodulation, etc. are different, and accordingly uplink reception characteristics value such as Eb/No, etc. measured in a base station is different. Herein, the base station can select better uplink signal quality.

It will be described in more detail.

The handheld terminal includes plural amplifiers. In more detail, in the handheld terminal, there are an APC (automatic power control) amplifier used for IF modulation; an APC amplifier used for RF modulation; and a PA (power amplifier), etc. used for amplifying final output power as a high output. Herein, a variable of the PA can be different according to manufacturers, however, because the PA generally includes a function for selecting bias voltage and modes (high gain/low gain), the handheld terminal can add a variable of the PA to an APC signal.

In addition, in case of using the 8PSK (8 phase shift keying) according to a modulation method, because there are three TPC bit, it is possible to increase the number of TPC bit two times greater than the number of the QPSK. For example, in CWTS TS C103 standard in China by the TD-SCDMA method, 2bit is allocated for TPC (transmit power control) in the QPSK method. Accordingly, the TPC coding method in accordance with the present invention is constructed so as to be adapted to four status communication environment in the QPSK method. And, 3bit is allocated for TPC (transmit power control) in the 8PSK method, the TPC coding method in accordance with the present invention is constructed so as to be adapted to eight status communication environment in the 8PSK method.

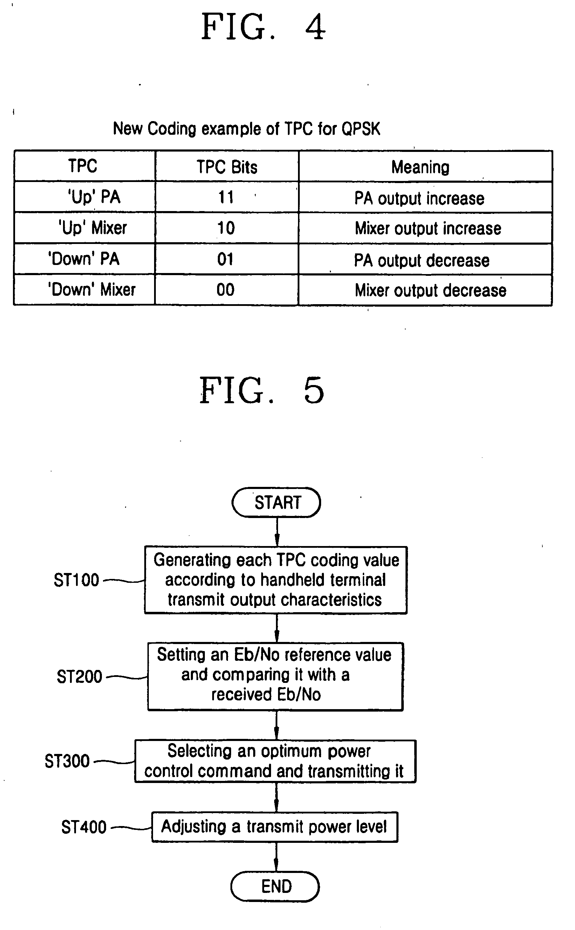

Figure 4 is a table illustrating a TPC (transmit power control) coding about a QPSK (quadrature phase shift keying) modulation method in accordance with the present invention.

As depicted in Figure 4, in the conventional QPSK modulation method, it is possible to select a uplink quality signal according to TPC coding only in a simple case such as up and down. However, in the TPC coding in accordance with the present invention, even in the up case, it is judged which part is to be up in order to obtain better uplink signal quality and power consumption.

Figure 5 is a flow chart illustrating a method for controlling output power of a handheld terminal in a mobile communication system in accordance with the present invention.

As depicted in Figure 5, in case of controlling output power of the handheld terminal by the base station, in order to control a transmit power level as the optimum state, the control unit 10 of the handheld terminal generates various TPC coding values corresponded to an APC of the mixer unit 20 and a high/low mode amplification rate contorl signal of the PA unit 40 and outputs them to the base station as shown at step ST100.

According to that, the base station sets an uplink Eb/No reference value about all handheld terminals and compares the Eb/No reference value with each generated TPC coding value as shown at step ST200. Herein, in order to select an optimum signal quality about various communication environments, the base station periodically compares amplification rate allocation of the mixer unit and the PA unit according to temporal variation by considering a distance between the base station and a handheld terminal, weather and speed variation due to transfer of the handheld terminal. For example, when a distance between the base station and the handheld terminal is too far or too close, it is judged Eb/No reference value is higher or lower than a certain reference level set in the base station, an optimum power control command about a TPC coding value is selected and is transmitted to the handheld terminal. In addition, when a distance between the handheld terminal and the base station is increased, output of the handheld terminal has to be increased by a control signal. Accordingly, when output increase unit is a 1dB step and output increase of +3dB is required, there are following four cases of power amplification allocation of the mixer unit and the PA unit.
(1) 3dB of output increase in the PA unit and 0dB of output increase in the mixer unit
(2) 2dB of output increase in the PA unit and 1dB of output increase in the mixer unit
(3) 1dB of output increase in the PA unit and 2dB of output increase in the mixer unit
(4) 0dB of output increase in the PA unit and 3dB of output increase in the mixer unit

When output increase unit is 0.5dB step, there can be seven cases. In addition, when weather is changed abruptly or the handheld terminal is moved, communication speed is varied according to those variation,

Afterward, the base station selects an optimum power control command about each outputted TPC coding value and transmits the selected value to the handheld terminal periodically as shown at step ST300. In more detail, by performing the above-mentioned four cases all, the base station judges a receiving signal, determines the best signal quality case and notifies the handheld terminal of it.

Lastly, the handheld terminal answers TPC coding about the power control command value selected by the base station and adjusts a transmit power level of the handheld terminal as shown at step ST400.

As described-above, in the TD-SCDMA type mobile communication system, the method for controlling output power of the handheld terminal in accordance with the present invention can use TPC coding bit all, perform various power controls according to modulation methods and generate various handheld terminal transmit output characteristics by applying an additional PA variable to an APC signal. Accordingly, it is possible to minimize current consumption while being adapted to various communication environments and control uplink output power of the handheld terminal as the optimum state.

## Claims

1. A method for controlling output power of a plurality of handheld terminals in a mobile communication system, comprising the steps of:
generating a transmit power control, referred to hereafter as TPC, coding value according to transmit output characteristics of each handheld terminal (ST100);
setting an uplink Eb/No reference value with respect to the plurality of handheld terminals and comparing the Eb/No reference value with the respective TPC coding value for each handheld terminal (ST200);
selecting in a base station an optimum power control command value for each handheld terminal and transmitting power control coding about the selected power control command values (ST300); and
adjusting a transmit power level (ST400) of each handheld terminal based on the TPC coding with respect to the selected power control command value, **characterized in that**
each handheld terminal adds a variable of a power amplifier unit, referred to hereafter as PA, (40) to an automatic power control signal in order to generate various transmit output characteristics of the handheld terminal in the TPC coding value generating step (ST100).

2. The method of claim 1, wherein the variable of the PA unit is bias voltage and mode selection value.

3. The method of claim 1, wherein each handheld terminal controls the variable of the PA unit in order to generate various transmit output characteristics in the TPC coding value generating step.

4. The method of claim 3, wherein the variable of the PA unit is bias voltage and mode selection value.

5. The method of claim 1, wherein each handheld terminal is controlled by a modulation method in order to generate various transmit output characteristics

6. The method of claim 5, wherein the modulation method uses two TPC coding bits in a quadrature phase shift keying method.

7. The method of claim 5, wherein the modulation method uses three TPC cording bits in a 8 phase shift keying method.

8. The method of claim 1, wherein each handheld terminal uses all TPC coding bits according to a modulation method or generates a TPC coding value by controlling a variable of the PA unit in order to generate various transmit output characteristics.

9. The method of claim 1, wherein each handheld terminal controls output power by controlling an amplification rate of a PA unit and an amplification rate of a mixer unit in order to generate various transmit output characteristics.

10. The method of claim 1, wherein a time slot in a radio frame outputs various TPC coding values in the TPC coding value generating step.

11. The method of claim 1, wherein a radio signal transmitted by a time division synchronous code division multiple access method is used as the reference value in the reference value comparing step.

12. The method of claim 1, wherein an Eb/No value is periodically compared to a reference value in response to a temporal variation based on a distance between a base station and a handheld terminal, weather and speed variation due to transfer of a handheld terminal.

13. The method of claim 1, wherein the optimum power control command is selected by judging whether a transmit power level of the respective handheld terminal is higher or lower than a reference level set in a base station when a distance between the base station and the respective handheld terminal is too far or too close in the reference value comparing step, and wherein the respective handheld terminal controls output power by setting an amplification rate of the PA unit and an amplification rate of a mixer unit in order to generate various transmit output characteristics based on the TPC coding value and the optimum power control command.

14. The method of claim 13, wherein amplification rate allocation to the mixer unit and the PA unit is increased by applying one of four cases: 3dB of output increase in the PA unit and 0dB of output increase in the mixer unit, 2dB of output increase in the PA unit and 1dB of output increase in the mixer unit, 1dB of output increase in the PA unit and 2dB of output increase in the mixer unit, and 0dB of output increase in the PA unit and 3dB of output increase in the mixer unit, when there is +3dB of output increase in the respective handheld terminal according to distance increase between the base station and the respective handheld terminal when an output increase unit of the respective handheld terminal is a 1dB step.

15. The method of claim 1, wherein gain of each handheld terminal amplifier is increased or decreased periodically according to temporal variation.

## Patentansprüche

1. Verfahren zum Steuern der Ausgangsleistung einer Mehrzahl Hand-Endgeräte in einem mobilen Kommunikationssystem, das die Schritte aufweist:
Erzeugen eines Sendeleistungssteuer-Codierwertes, im Folgenden TPC-Codierwert bezeichnet, entsprechend den Sendeausgangs-Kennwerten jedes Hand-Endgeräts (ST100);
Einstellen eines Uplink-Eb/No-Referenwertes bezüglich der Mehrzahl Hand-Endgeräte und Vergleichen des Eb/No-Referenzwertes mit dem jeweiligen TPC-Codierwert für jedes Hand-Endgerät (ST200);
Wählen eines optimalen Leistungssteuerbefehlwertes in einer Basisstation für jedes Hand-Endgerät und Senden einer Leistungssteuer-Codierung der gewählten Leistungssteuerbefehlwerte (ST300); und
Einstellen eines Sendeleistungspegels (ST400) jedes Hand-Endgeräts auf Basis der TPC-Codierung bezüglich des gewählten Leistungssteuerbefehlwertes,
**dadurch gekennzeichnet, dass**
jedes Hand-Endgerät eine Variable einer Leistungsverstärkereinheit (40), im Folgenden PA bezeichnet, zu einem automatischen Leistungssteuersignal addiert, um verschiedene Sendeausgangscharakteristiken des Hand-Endgeräts im Schritt des Erzeugens des TPC-Codierwertes (ST100) zu erzeugen.

2. Verfahren nach Anspruch 1, bei dem die Variable der PA-Einheit eine Vorspannung und ein Modusauswahlwert ist.

3. Verfahren nach Anspruch 1, bei dem jedes Hand-Endgerät die Variable der PA-Einheit steuert, um im Schritt des Erzeugens des TPC-Codierwertes verschiedene Sendeausgangscharakteristiken zu erzeugen.

4. Verfahren nach Anspruch 3, bei dem die Variable der PA-Einheit eine Vorspannung und ein Modusauswahlwert ist.

5. Verfahren nach Anspruch 1, bei dem jedes Hand-Endgerät durch ein Modulationsverfahren gesteuert wird, um verschiedene Sendeausgangscharakteristiken zu erzeugen.

6. Verfahren nach Anspruch 5, bei dem das Modulationsverfahren zwei TPC-Codierbits in einem Quadratur-Phasenumtastverfahren verwendet.

7. Verfahren nach Anspruch 5, bei dem das Modulationsverfahren drei TPC-Codierbits in einem Achtphasenumtastverfahren verwendet.

8. Verfahren nach Anspruch 1, bei dem jedes Hand-Endgerät alle TPC-Codierbits gemäß einem Modulationsverfahren verwendet oder einen TPC-Codierwert erzeugt, indem eine Variable der PA-Einheit gesteuert wird, um verschiedene Sendeausgangscharakteristiken zu erzeugen.

9. Verfahren nach Anspruch 1, bei dem jedes Hand-Endgerät die Ausgangsleistung durch Steuern einer Verstärkungsrate einer PA-Einheit und einer Verstärkungsrate einer Mischereinheit steuert, um verschiedene Sendeausgangscharakteristiken zu erzeugen.

10. Verfahren nach Anspruch 1, bei dem ein Zeitschlitz in einem Funkrahmen im Schritt des Erzeugens des TPC-Codierwertes verschiedene TPC-Codierwerte ausgibt.

11. Verfahren nach Anspruch 1, bei dem ein Funksignal, das durch ein synchrones Zeitmultiplex-Codemultiplexzugriffsverfahren gesendet wird, als Referenzwert im Referenzwert-Vergleichsschritt verwendet wird.

12. Verfahren nach Anspruch 1, bei dem der Eb/No-Wert periodisch mit einem Referenzwert als Antwort auf eine zeitliche Schwankung auf Basis des Abstands zwischen einer Basisstation und einem Hand-Endgerät und Witterungs- und Geschwindigkeitsschwankungen aufgrund der Bewegung eines Hand-Endgeräts verglichen wird.

13. Verfahren nach Anspruch 1, bei dem der optimale Leistungssteuerbefehl gewählt wird, indem bestimmt wird, ob ein Sendeleistungspegel des jeweiligen Hand-Endgeräts höher oder niedriger ist als ein in einer Basisstation eingestellter Referenzpegel, wenn der Abstand zwischen der Basisstation und dem jeweiligen Hand-Endgerät im Referenzwert-Vergleichsschritt zu groß oder zu klein ist, und bei dem das jeweilige Hand-Endgerät die Ausgangsleistung steuert, indem eine Verstärkungsrate der PA-Einheit und eine Verstärkungsrate der Mischereinheit eingestellt wird, um verschiedene Sendeausgangscharakteristiken auf Basis des TPC-Codierwertes und des optimalen Leistungssteuerbefehls zu erzeugen.

14. Verfahren nach Anspruch 13, bei dem die Zuordnung der Verstärkungsrate zur Mischereinheit und zur PA-Einheit durch Zugrundelegen eines von vier Fällen erhöht wird: 3 dB Erhöhung der Ausgangsleistung der PA-Einheit und 0 dB Erhöhung der Ausgangsleistung der Mischereinheit, 2 dB Erhöhung der Ausgangsleistung der PA-Einheit und 1 dB Erhöhung der Ausgangsleistung der Mischereinheit, 1 dB Erhöhung der Ausgangsleistung der PA-Einheit und 2 dB Erhöhung der Ausgangsleistung der Mischereinheit und 0 dB Erhöhung der Ausgangsleistung der PA-Einheit und 3 dB Erhöhung der Ausgangsleistung der Mischereinheit, wenn eine Erhöhung der Ausgangsleistung um +3 dB des jeweiligen Hand-Endgeräts entsprechend der Zunahme des Abstands zwischen der Basisstation und dem jeweiligen Hand-Endgerät vorliegt, wenn die Erhöhung der Ausgangsleistung des jeweiligen Hand-Endgeräts ein 1 dB-Schritt ist.

15. Verfahren nach Anspruch 1, bei dem der Verstärkungsfaktor des Verstärkers jedes Hand-Endgeräts periodisch entsprechend der zeitlichen Schwankung erhöht oder verringert wird.

## Revendications

1. Procédé de commande de la puissance de sortie d'une pluralité de terminaux de poche dans un système de communication mobile, comprenant les étapes consistant à :
générer une commande de puissance de transmission, que l'on appellera par la suite TPC, une valeur de codage conformément aux caractéristiques de sortie de transmission de chaque terminal de poche (ST100) ;
établir une valeur de référence de liaison montante Eb/No par rapport à la pluralité de terminaux de poche et comparer la valeur de référence Eb/No à la valeur de codage TPC respective pour chaque terminal de poche (ST 200) ;
sélectionner dans une station de base une valeur de commande de commande de puissance optimale pour chaque terminal de poche et transmettre le codage de commande de puissance concernant les valeurs de commande de commande de puissance sélectionnée (ST 300) ; et
ajuster un niveau de puissance de transmission (ST 400) de chaque terminal de poche sur la base du codage TPC par rapport à la valeur de commande de commande de puissance sélectionnée,
**caractérisé en ce que**
chaque terminal de poche ajoute une variable d'une unité d'amplificateur de puissance (40), que l'on appellera par la suite PA, à un signal de commande de puissance automatique afin de générer diverses caractéristiques de sortie de transmission du terminal de poche à l'étape de génération de valeur de codage TPC (ST 100).

2. Procédé selon la revendication 1, dans lequel la variable de l'unité PA est une tension de polarisation et une valeur de sélection de mode.

3. Procédé selon la revendication 1, dans lequel chaque terminal de poche commande la variable de l'unité PA afin de générer diverses caractéristiques de sortie de transmission à l'étape de génération de valeur de codage TPC.

4. Procédé selon la revendication 3, dans lequel la variable de l'unité PA est une tension de polarisation et une valeur de sélection de mode.

5. Procédé selon la revendication 1, dans lequel chaque terminal de poche est commandé par un procédé de modulation afin de générer diverses caractéristiques de sortie de transmission.

6. Procédé selon la revendication 5, dans lequel le procédé de modulation utilise deux bits de codage TPC dans un procédé de modulation par déplacement de phase en quadrature.

7. Procédé selon la revendication 5, dans lequel le procédé de modulation utilise trois bits de codage TPC dans un procédé de modulation par déplacement de phase octovalente.

8. Procédé selon la revendication 1, dans lequel chaque terminal de poche utilise tous les bits de codage TPC conformément à un procédé de modulation ou génère une valeur de codage TPC en commandant une variable de l'unité PA afin de générer diverses caractéristiques de sortie de transmission.

9. Procédé selon la revendication 1, dans lequel chaque terminal de poche commande la puissance de sortie en commandant un taux d'amplification d'une unité PA et un taux d'amplification d'une unité de mélangeur afin de générer diverses caractéristiques de sortie de transmission.

10. Procédé selon la revendication 1, dans lequel un intervalle de temps dans une trame radio délivre en sortie diverses valeurs de codage TPC à l'étape de génération de valeur de codage TPC.

11. Procédé selon la revendication 1, dans lequel un signal radio transmis par un procédé à accès multiple par répartition en code synchrone et répartition dans le temps est utilisé en tant que valeur de référence à l'étape de comparaison de valeur de référence.

12. Procédé selon la revendication 1, dans lequel une valeur Eb/No est périodiquement comparé à une valeur de référence en réponse à une variation temporelle sur la base d'une distance entre une station de base et un terminal de poche, du temps et de la variation de vitesse en raison du transfert d'un terminal de poche.

13. Procédé selon la revendication 1, dans lequel la commande de commande de puissance optimale est sélectionnée en jugeant si un niveau de puissance de transmission du terminal de poche respectif est supérieur ou inférieur à un niveau de référence établi dans une station de base lorsqu'une distance entre la station de base et le terminal de poche respectif est trop loin ou trop proche à l'étape de comparaison de valeur de référence, et dans lequel le terminal de poche respectif commande la puissance de sortie en établissant un taux d'amplification de l'unité PA et un taux d'amplification de l'unité de mélangeur afin de générer diverses caractéristiques de sortie de transmission sur la base de la valeur de codage TPC et de la commande de commande de puissance optimale.

14. Procédé selon la revendication 13, dans lequel l'attribution du taux d'amplification à l'unité de mélangeur et à l'unité PA est augmentée en appliquant l'un parmi quatre cas : 3 dB d'augmentation de sortie dans l'unité PA et 0 dB d'augmentation de sortie dans l'unité de mélangeur, 2 dB d'augmentation de sortie dans l'unité PA et 1 dB d'augmentation de sortie dans l'unité de mélangeur, 1 dB d'augmentation de sortie dans l'unité PA et 2 dB d'augmentation de sortie dans l'unité de mélangeur, et 0 dB d'augmentation de sortie dans l'unité PA et 3 dB d'augmentation de sortie dans l'unité de mélangeur, lorsqu'il y a +3 dB d'augmentation de sortie dans le terminal de poche respectif conformément à une augmentation de distance entre la station de base et le terminal de poche respectif lorsqu'une unité d'augmentation de sortie du terminal de poche respectif est de 1 dB.

15. Procédé selon la revendication 1, dans lequel le gain de chaque amplificateur de terminal de poche est augmenté ou diminué périodiquement conformément à la variation temporelle.
